(19) Europäisches Patentamt
European Patent Office
Office européen des brevets

(11) **EP 4 751 988 A1**

(12) **EUROPEAN PATENT APPLICATION**

(43) Date of publication:
**03.06.2026 Bulletin 2026/23**

(21) Application number: **25218641.6**

(22) Date of filing: **26.11.2025**

(51) International Patent Classification (IPC):
**B60L 58/00** *(2019.01)*    **B60L 58/40** *(2019.01)*
**G06N 3/08** *(2023.01)*

(52) Cooperative Patent Classification (CPC):
**B60L 58/40; G01R 31/367; G06N 3/044;
G06N 3/045; G06N 3/0464; G06N 3/08;
G06N 3/084; G06N 3/09; G06N 20/00; G06V 10/82;
H01M 8/04992; B60L 2200/40; B60L 2260/46;
B60L 2260/54**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.11.2024 CN 202411727526**

(71) Applicant: **Volvo Construction Equipment AB
631 85 Eskilstuna (SE)**

(72) Inventors:
• **Du, Zhongying**
  **Changchun City (CN)**
• **Ma, Terence**
  **Jinan, 250000 (CN)**
• **Zhou, Claus**
  **Jinan, 250100 (CN)**
• **Liu, Hongfei**
  **Changchun City (CN)**

(74) Representative: **Valea AB
Box 1098
405 23 Göteborg (SE)**

(54) **METHOD FOR CONTROLLING VEHICLE POWER, COMPUTER SYSTEM, AND VEHICLE**

(57)    A method for controlling vehicle power, a computer system, and a vehicle are disclosed. The vehicle includes a fuel cell, a power battery, a hydraulic system, an accessory system, and a visual sensor. The method is performed by a processing circuit of a computer system. The method includes obtaining an image of a construction earthwork by the visual sensor; identifying a type of the construction earthwork by an earthwork classification model based on the image of the construction earthwork; obtaining a power demand load spectrum of the vehicle within a first time duration; correcting the type of the construction earthwork based on the power demand load spectrum; inputting the power demand load spectrum and the corrected type of the construction earthwork into a pre-trained neural network prediction model, and predicting a power load spectrum of the vehicle within a second time duration by the neural network prediction model; and determining optimal power allocation between the fuel cell and the power battery based on the predicted power load spectrum, so as to minimize an operating cost objective function within the second time duration.

FIG. 1

**Description**

**Technical Field**

The present disclosure relates generally to vehicles. In particular, the present disclosure relates to a method for controlling vehicle power, a computer system, and a vehicle. The present disclosure may be applied to heavy-duty vehicles, such as construction machinery and other engineering machinery, as well as other types of vehicles. The present disclosure may be described with reference to particular vehicles; however, the present disclosure is not limited to any particular vehicle.

**Background**

Energy-saving standards and emission regulations in fields of vehicles and construction machinery are becoming increasingly stringent. Therefore, actively developing new energy technologies has become an important development direction of the industry. In this context, fuel cells, especially hydrogen fuel cells (FCs), have gradually become a scientific and feasible new energy alternative in the field of engineering machinery due to their significant advantages such as cleanliness, environmental friendliness, fast refueling speed, and high energy conversion efficiency.

Energy Management Strategy (EMS) is a control core of hybrid engineering machinery, and its quality directly determines the overall performance of a hybrid power system. An unreasonable EMS may cause a power battery and a fuel cell to work under harsh conditions for a long time, which may have a negative impact on their lifespan. This problem is particularly prominent for high-power, high-emission, and low-energy-efficiency hydraulic excavators.

Therefore, it is necessary to design a new energy management solution for a hybrid power system of construction machinery to improve the overall performance of the hybrid power system of construction machinery, reduce its life cycle cost, and improve its economic efficiency.

**Summary of the Invention**

To address the above and other issues, the present disclosure proposes a method for controlling vehicle power, a computer system, and a vehicle, which utilize artificial intelligence technology to obtain effective information from the vehicle itself and the outside world, and apply this information to power allocation of a hybrid power system to optimize energy management of a hybrid vehicle.

In a first aspect of the present disclosure, a computer-implemented method for power allocation of a vehicle is provided, the vehicle including a fuel cell, a power battery, a hydraulic system, an accessory system, and a visual sensor, the method being performed by a processing circuit of a computer system, the method including the following steps: obtaining an image of a construction earthwork by the visual sensor; identifying a type of the construction earthwork by an earthwork classification model based on the image of the construction earthwork; obtaining a power demand load spectrum of the vehicle within a first time duration; correcting the type of the construction earthwork based on the power demand load spectrum; inputting the power demand load spectrum and the corrected type of the construction earthwork into a pre-trained neural network prediction model, and predicting a power load spectrum of the vehicle within a second time duration by the neural network prediction model; and determining optimal power allocation between the fuel cell and the power battery based on the predicted power load spectrum, so as to minimize an operating cost objective function within the second time duration. The first aspect of the present disclosure may be aimed at improving prediction accuracy of vehicle power demand and optimizing vehicle power allocation. By way of example and not limitation, one technical advantage of the present disclosure may include significantly improving the prediction accuracy of power demand, enhancing the robustness of energy management methods, and providing a new solution for optimizing energy management strategies.

Optionally, in some examples, the earthwork classification model may be a neural network obtained by offline training based at least on an image dataset of different types of earthwork: where an input of the earthwork classification model may include image data of the construction earthwork, and an output may include the type of the construction earthwork. By way of example and not limitation, one technical advantage of the present disclosure may include the provision of higher accuracy in identifying types of construction earthwork by integrating artificial intelligence technology with visual sensors.

Optionally, in some examples, the neural network prediction model may be a neural network obtained by offline training based at least on a historical operating condition dataset of the vehicle's operation on multiple types of construction earthworks; where an input of the neural network prediction model may include a historical power demand load spectrum within the first time duration and a type of a corresponding construction earthwork, and an output may include a predicted power demand load spectrum within the second time duration. By way of example and not limitation, one technical advantage of the present disclosure may include more accurately identifying different types of construction earthwork, thereby more accurately predicting the power demand load spectrum.

Optionally, in some examples, the historical operating condition dataset may include historical power demand load spectrum data of the vehicle.

Optionally, in some examples, the step of determining the optimal power allocation between the fuel cell and the power battery may include: determining an operating cost objective function; determining constraints of the operating cost objective function based on a current operating condition of the vehicle; and obtaining the optimal power allocation between the fuel cell and the power battery based on the operating cost objective function and the constraints. By way of example and not limitation, one technical advantage of the present disclosure may include providing a unified framework for optimizing power allocation between fuel cells and power batteries, thereby facilitating adaptation to different types and/or models of vehicles.

Optionally, in some examples, the step of determining the operating cost objective function may include: determining the operating cost objective function according to the current operating condition of the vehicle and based on equivalent hydrogen consumption, dynamic performance degradation of the fuel cell, and dynamic performance degradation of the power battery, where the equivalent hydrogen consumption may include hydrogen consumption of the fuel cell and equivalent hydrogen consumption of the power battery.

Optionally, in some examples, the operating cost objective function may be an objective function for multi-objective minimization of the equivalent hydrogen consumption, the dynamic performance degradation of the fuel cell, and the dynamic performance degradation of the power battery, or the operating cost objective function may be an objective function for minimization of the operating cost, where the operating cost may be determined based on the equivalent hydrogen consumption, the dynamic performance degradation of the fuel cell, and the dynamic performance degradation of the power battery. By way of example and not limitation, one technical advantage of the present disclosure may include comprehensively evaluating and optimizing the economic efficiency of a hybrid excavator throughout its life cycle from multiple dimensions including the dynamic performance degradation of the fuel cell, the dynamic performance degradation of the power battery, and the equivalent hydrogen consumption.

Optionally, in some examples, the method may further include establishing a power system model of the vehicle, where the power system model may include an equivalent hydrogen consumption model, a fuel cell dynamic performance degradation model, and a power battery dynamic performance degradation model, where the equivalent hydrogen consumption model may characterize the relationship between the equivalent hydrogen consumption of the vehicle and a first set of operating condition parameters; the fuel cell dynamic performance degradation model may characterize the relationship between the performance degradation of the fuel cell and a second set of operating condition parameters; and the power battery dynamic performance degradation model may characterize the relationship between the performance degradation of the power battery and a third set of operating condition parameters.

Optionally, in some examples, the first set of operating condition parameters may include one or more of the following: hydrogen consumption of the fuel cell, equivalent hydrogen consumption of the power battery, output power of the fuel cell, equivalent factor of equivalent hydrogen consumption of the power battery, balance coefficient of state of charge (SOC) of the power battery, state of charge of the power battery, constant in a hydrogen consumption fitting curve of the fuel cell, output power of the power battery, discharge efficiency and average discharge efficiency of the power battery, average instantaneous hydrogen consumption of the fuel cell, average output power of the fuel cell, lifetime degradation percentage of the fuel cell system, environmental acceleration factor, idle time, number of start-stop cycles, time of frequent load changes, heavy load time, natural degradation rate of the fuel cell system, and degradation coefficients under the start-stop condition, the idle condition, the frequent load change condition, and the heavy load condition. Optionally, the second set of operating condition parameters may include one or more of the following: lifetime degradation percentage of the fuel cell system, environmental acceleration factor, idle time, number of start-stop cycles, time of frequent load changes, heavy load time, natural degradation rate of the fuel cell system, and degradation coefficients under the start-stop condition, the idle condition, the frequent load change condition, and the heavy load condition. Optionally, the third set of operating condition parameters may include one or more of the following: power battery charging rate Ic, activation energy, operating temperature, and cumulative charge.

Optionally, in some examples, the constraints of the operating cost objective function may include: total power demand includes a sum of the output power of the fuel cell and the output power of the power battery; a speed at which the fuel cell outputs power within the second time duration is less than or equal to a maximum power response speed of the fuel cell; the output power of the fuel cell is between minimum and maximum values of the output power of the fuel cell; and the SOC of the power battery is between minimum and maximum values of the SOC of the power battery.

Optionally, in some examples, the step of obtaining the optimal power allocation between the fuel cell and the power battery based on the operating cost objective function and the constraints may include: constructing a Hamiltonian function based on the constraints through a two-end constrained optimal control method; deriving a predicted optimal co-state variable based on the Hamiltonian function; and applying the predicted optimal co-state variable to the operating cost objective function to solve for the optimal power allocation that minimizes the operating cost objective function. By way of example and not limitation, one technical advantage of the present disclosure may include fully considering a potential impact of future information on an optimization result during prediction of the optimal co-state variable, thereby effectively improving the economic efficiency of the vehicle.

Optionally, in some examples, the first time duration may be at least one of the following: less than or equal to 30 seconds, less than or equal to 15 seconds, and less than or equal to 5 seconds; and the second time duration is at least one of the following: less than or equal to 30 seconds, less than or equal to 15 seconds, and less than or equal to 5 seconds. By way of example and not limitation, one technical advantage of the present disclosure may include adaptively and quickly adjusting the power allocation of the fuel cell and the power battery when the type of construction earthwork changes, so that the energy management strategy is more closely matched with actual construction requirements.

Optionally, in some examples, the neural network prediction model may include a self-organizing map neural network.

Optionally, in some examples, the vehicle may be a hybrid excavator.

In a second aspect of the present disclosure, a computer system is provided, including: a processing circuit; and a memory having computer-executable instructions stored thereon, where the computer-executable instructions, when executed by the processing circuit, implement any one of the methods described in the present disclosure.

In a third aspect of the present disclosure, a vehicle is provided, the vehicle including a fuel cell, a power battery, a hydraulic system, an accessory system, and a visual sensor, where the vehicle further includes the computer system according to the present disclosure.

It will be appreciated by those skilled in the art that the disclosed aspects, examples (including any preferred examples) and/or appended claims may be suitably combined with each other. Additional features and advantages are disclosed in the following description, claims, and drawings, and in part will be apparent to those skilled in the art from the present disclosure or may be learned by practicing the present disclosure as described herein.

Also disclosed herein are a computer system, a control unit, a code module, a computer-implemented method, a computer-readable medium, and a computer program product related to the above technical advantages.

## Brief Description of Drawings

FIG. 1 is a schematic system block diagram of a power system of a vehicle according to an example of the present disclosure;

FIG. 2 is a schematic flowchart of a method for controlling vehicle power according to an example of the present disclosure;

FIG. 3 is a schematic flowchart of a method for controlling vehicle power according to another example of the present disclosure;

FIG. 4 is a schematic flowchart of an example process of performing offline training and online prediction in a method for controlling vehicle power according to still another example of the present disclosure;

FIG. 5 is a schematic flowchart of an example process of solving for an optimal co-state variable in a method for controlling vehicle power according to an example of the present disclosure; and

FIG. 6 is a schematic block diagram of a computer system for implementing examples disclosed herein according to an example of the present disclosure.

## Detailed Description

The detailed description that follows provides information and examples of the technology disclosed herein in sufficient detail to enable those skilled in the art to practice the present disclosure.

The terminology used herein is for the purpose of describing particular aspects only and is not intended to be limiting of the present disclosure. As used herein, the term "and/or" includes any and all combinations of one or more of the associated listed items. It will be further understood that the words "include," "comprising," "containing," and/or "covering" when used herein indicate the presence of stated features, integers, actions, steps, operations, elements, and/or components, but do not preclude the presence or addition of one or more other features, integers, actions, steps, operations, elements, components, and/or combinations thereof.

It will be understood that, although the terms "first," "second," and the like may be used herein to describe various elements, these elements should not be limited by these terms. These terms are only used to distinguish one element from another. For example, a first element may be termed a second element, and similarly, a second element may be termed a first element, without departing from the scope of the present disclosure.

Relative terms, such as "below" or "above" or "higher" or "lower" or "horizontal" or "vertical" may be used herein to describe one element's relationship to another element as illustrated in the drawings. It will be understood that these terms and those described above are intended to encompass different orientations of the device in addition to the orientation depicted in the figures. It will be understood that when an element is referred to as being "connected" or "coupled" to another element, it can be directly connected or coupled to the other element or an intervening element may be present. In contrast, when the element is referred to as being "directly connected" or "directly coupled" to another element, there is no intervening element.

Unless otherwise defined, all terms (including technical and scientific terms) used herein have the same meaning as commonly understood by one of ordinary skill in the art to which the present disclosure belongs. It will also be understood that the terms used herein should be interpreted as having a meaning consistent with their meaning in the context herein and the relevant prior art, and should not be interpreted as any idealized or overly formal meaning unless otherwise indicated.

Hereinafter, examples of the present disclosure will be described in more detail with reference to the accompanying drawings.

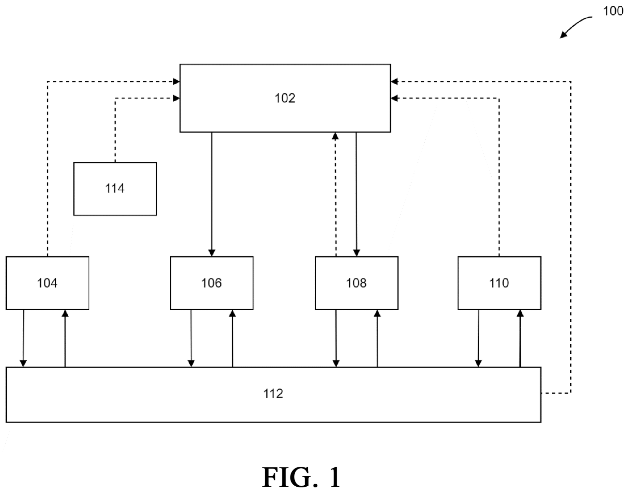

FIG. 1 is a schematic system block diagram of a power system of a vehicle 100 (especially hybrid construction machinery) according to an example of the present disclosure. As shown in FIG. 1, the vehicle 100 includes a fuel cell system 106, a power battery system 108, a hydraulic system 110, an accessory system 104, and a computer system 102. As shown in FIG. 1, the vehicle 100 may further include a work system 112. The work system 112 may be driven by electricity from the fuel cell system 106 and/or the power battery system 108 and hydraulic pressure from the hydraulic system 110 to perform various construction operations. In one example, the accessory system 104 may include various other power consuming devices on the vehicle 100 other than the work system 112, such as a lighting system and an air conditioning system. In the example of the present disclosure, the vehicle 100 further includes a visual sensor 114 configured to obtain image data of a construction earthwork, such as photos, videos, 3D images, or visual scan data obtained by visible light and/or invisible light imaging.

In the example shown in FIG. 1, the computer system 102 may be configured to obtain various information about the vehicle 100 from one or more of the fuel cell system 106, the power battery system 108, the hydraulic system 110, the accessory system 104, and the work system 112, especially information related to power control of the vehicle 100, such as fuel cell output power information from the fuel cell system 106, a State of Charge (SOC) from the power battery system 108, hydraulic load power demand from the hydraulic system, accessory power demand from the accessory system 104, and various system state information from the work system. Furthermore, the computer system 102 may also be configured to send control information to various systems, subsystems, and components of the vehicle 100 to control them. By way of example and not limitation, the control information may include, for example, fuel cell output power sent to the fuel cell system 106, power battery output power sent to the power battery system 108, and the like. It will be understood that the computer system 102 may be implemented as an energy management controller, or partially or fully implemented as a computing device, a processing circuit, a server, or a combination thereof on the vehicle 100, or partially or fully implemented through a network or cloud, or implemented as a combination thereof.

In some examples, the energy management controller receives the power battery SOC, the load power demand, the accessory power demand, and the system state information of the excavator, and reasonably allocates power output between the fuel cell and the power battery according to the method of the present disclosure to minimize the cycle operating cost of the hybrid excavator.

It will be understood that FIG. 1 merely schematically illustrates major components of the power system of the vehicle 100, and is not intended to limit the present disclosure. The vehicle 100 may further include other components not shown, such as a travel mechanism and a transmission mechanism. In one example, the vehicle 100 may be construction machinery, such as hybrid construction machinery. In one optional example, the vehicle 100 may be a hybrid excavator. It will be understood that the principles of the present disclosure may be applied to other types of construction machinery or vehicles besides excavators.

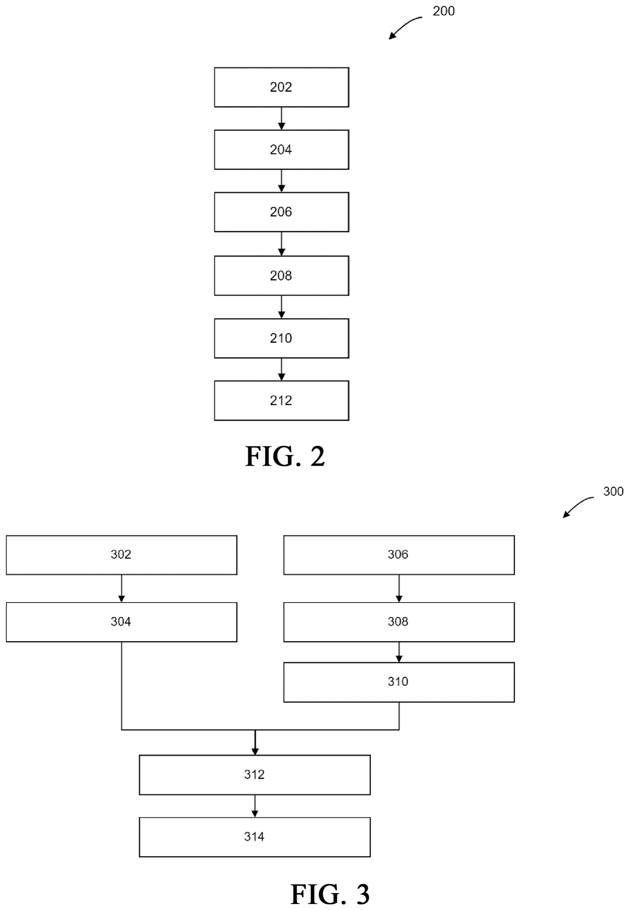

FIG. 2 is a schematic flowchart of a method 200 for controlling vehicle power according to an example of the present disclosure. In one example, the method 200 is a computer-implemented method for power allocation in a vehicle, and may be performed by a processing circuit of a computer system. The exemplary method of the present disclosure is described below in the context of the vehicle 100 shown in FIG. 1, but it will be understood that the method of the present disclosure is not limited thereto and may be applied to different vehicles and different vehicle configurations without departing from the scope of the present disclosure.

As an example, the method 200 begins at step 202. In step 202, an image of a construction earthwork is obtained through a visual sensor 114.

In step 204, based on the image of the construction earthwork, a type of the construction earthwork is identified by using an earthwork classification model. In the context of the present disclosure, the earthwork classification model is a machine learning model that identifies the earthwork type through images, such as a supervised learning model, an unsupervised learning model, and a reinforcement learning model. In one example, the earthwork classification model may be a neural network obtained by offline training based at least on a dataset of images of different types of earthworks. Furthermore, an input of the earthwork classification model may include image data of the construction earthwork, and an output of the earthwork classification model includes the type of the construction earthwork. In the context of the present disclosure, the construction earthwork refers to an object of operation for engineering machinery or vehicles, and the type of construction earthwork includes but is not limited to materials, sand, soil, rock, coal seam, or the like, or a combination thereof.

In step 206, a power demand load spectrum of the vehicle within a first time duration is obtained. The power demand load spectrum reflects a power demand condition of the vehicle within the first time duration. It will be understood that the power demand load spectrum may be obtained based on the actual operation of the vehicle on the construction earthwork within the first time duration, and therefore the power demand load spectrum obtained for different types of construction earthworks may be different. For example, when the type of construction earthwork is rock, the power demand load spectrum obtained is generally higher than the power demand load obtained when the type of construction earthwork is coal seam.

In step 208, the type of construction earthwork is modified based on the power demand load spectrum. In this way, by using additional information obtained from the power demand load spectrum to correct the type of construction earthwork identified from the image in step 204, the accuracy of judgment on the type of construction earthwork can be significantly improved, which is conducive to more accurate estimation, allocation, and control of vehicle power. For example, using image recognition alone, soil that is similar in color and texture to sand may be mistakenly identified as sand, resulting in the vehicle's power allocation not matching actual requirements. According to the method of the present disclosure, the obtained power demand load spectrum reflects the actual power demand condition of the vehicle within the first time duration, corresponding to the type of construction earthwork actually operated. In this example, the obtained power demand load spectrum reflects that the vehicle is operating on soil, so the type of construction earthwork can be corrected from sand identified from the image to soil actually being operated on.

In step 210, the power demand load spectrum and the corrected type of construction earthwork are input into a pre-trained neural network prediction model, and a power load spectrum of the vehicle within a second time duration is predicted by the neural network prediction model. Here, the power load spectrum of the vehicle in a future period of time (for example, within the second time duration) can be predicted using the pre-trained neural network prediction model, serving as a basis for power allocation optimization. In one example, the neural network prediction model may be a neural network obtained by offline training based at least on a historical operating condition dataset of the vehicle's operation on multiple types of construction earthworks. In one example, the historical operating condition dataset may include historical power demand load spectrum data of the vehicle. In addition, an input of the neural network prediction model may include a historical power demand load spectrum within the first time duration and a type of a corresponding construction earthwork, and an output of the neural network prediction model may include the predicted power demand load spectrum within the second time duration. In a preferred example, the neural network prediction model may include a Self-Organizing Map (SOM) neural network.

It will be understood that although objects of operation of construction machinery such as excavators are diverse, the operating conditions of construction machinery such as excavators generally have characteristics such as reciprocating and short operating cycles. In a preferred example, a short-term power prediction can be provided by the neural network prediction model, so that even if the power demand load spectrum of a vehicle or construction machinery changes in a short period of time, the method according to the present disclosure can timely adjust the energy management of the hybrid power and adjust the power allocation of the fuel cell and the power battery, thereby extending the service life of the fuel cell and the power battery and improving their economic efficiency. Accordingly, in one example, the first time duration may be at least one of the following: less than or equal to 30 seconds, less than or equal to 15 seconds, and less than or equal to 5 seconds. In one example, the second time duration may be at least one of the following: less than or equal to 30 seconds, less than or equal to 15 seconds, and less than or equal to 5 seconds. It will be understood that the specific values or ranges of the first time duration and the second time duration are not limited to the specific values described herein, but can be selected by those skilled in the art according to the needs of actual applications without departing from the principles of the present disclosure.

In step 212, based on the predicted power load spectrum, an optimal power allocation between the fuel cell and the power battery is determined to minimize an operating cost objective function within the second time duration. In the context of the present disclosure, the operating cost objective function is used to quantitatively measure the operating cost of a vehicle or construction machinery within the second time duration.

In this way, the method according to the present disclosure can provide improved vehicle power allocation for the vehicle or construction machinery, thereby providing more optimized hybrid power system energy management. As an example, the method according to the present disclosure can significantly improve the prediction accuracy of the power demand of hybrid vehicles and/or construction machinery based on the principle of minimizing periodic operating costs, and can have the feasibility of real-time application while the optimization results are close to the global optimality.

In one example, step 212 of determining the optimal power allocation between the fuel cell and the power battery may include: determining an operating cost objective function; determining constraints of the operating cost objective function based on a current operating condition of the vehicle; and obtaining the optimal power allocation between the fuel cell and the power battery based on the operating cost objective function and the constraints. Those skilled in the art will understand that, as the optimization goal for optimal power allocation between the fuel cell and the power battery, the operating cost objective function can be set based on different criteria, including but not limited to fuel consumption, electricity consumption, fuel cost, electricity cost, fuel cell life loss, power battery life loss, the relationship between fuel cost and battery cost, and the like. It will also be understood that the fuel cell cost and the power battery cost may have the same or different weights. Furthermore, different operating cost objective functions may be set for different countries/regions and/or different seasons.

In one example, the step of determining the operating cost objective function may include: determining the operating cost objective function according to the current operating condition of the vehicle and based on equivalent hydrogen consumption, dynamic performance degradation of the fuel cell, and dynamic performance degradation of the power battery. In addition, the equivalent hydrogen consumption may include hydrogen consumption of the fuel cell and equivalent hydrogen consumption of the power battery.

In a further example, the operating cost objective function is an objective function for multi-objective minimization of the equivalent hydrogen consumption, the dynamic performance degradation of the fuel cell, and the dynamic performance degradation of the power battery. Or, in an alternative example, the operating cost objective function may be an objective function for minimization of the operating cost. Here, the operating cost may be determined based on the equivalent hydrogen consumption, the dynamic performance degradation of the fuel cell, and the dynamic performance degradation of the power battery.

In one example, the constraints of the operating cost objective function may include: total power demand includes a sum of the output power of the fuel cell and the output power of the power battery; a speed at which the fuel cell outputs power within the second time duration is less than or equal to a maximum power response speed of the fuel cell; the output power of the fuel cell is between minimum and maximum values of the output power of the fuel cell; and the SOC of the power battery is between minimum and maximum values of the SOC of the power battery.

In addition, in one example, the step of obtaining the optimal power allocation between the fuel cell and the power battery based on the operating cost objective function and the constraints may include: constructing a Hamiltonian function based on the constraints through a two-end constrained optimal control method; deriving a predicted optimal co-state variable based on the Hamiltonian function; and applying the predicted optimal co-state variable to the operating cost objective function to solve for the optimal power allocation that minimizes the operating cost objective function.

In one example, the method 200 may further include establishing a power system model of the vehicle, where the power system model includes an equivalent hydrogen consumption model, a fuel cell dynamic performance degradation model, and a power battery dynamic performance degradation model.

In one example, the equivalent hydrogen consumption model may characterize the relationship between the equivalent hydrogen consumption of the vehicle and a first set of operating condition parameters. By way of example and not limitation, the first set of operating condition parameters may include one or more of the following: hydrogen consumption of the fuel cell, equivalent hydrogen consumption of the power battery, output power of the fuel cell, equivalent factor of equivalent hydrogen consumption of the power battery, balance coefficient of state of charge (SOC) of the power battery, state of charge of the power battery, constant in a hydrogen consumption fitting curve of the fuel cell, output power of the power battery, discharge efficiency and average discharge efficiency of the power battery, average instantaneous hydrogen consumption of the fuel cell, average output power of the fuel cell, lifetime degradation percentage of the fuel cell system, environmental acceleration factor, idle time, number of start-stop cycles, time of frequent load changes, heavy load time, natural degradation rate of the fuel cell system, and degradation coefficients under the start-stop condition, the idle condition, the frequent load change condition, and the heavy load condition.

In one example, the fuel cell dynamic performance degradation model may characterize the relationship between the performance degradation of the fuel cell and a second set of operating condition parameters. By way of example and not limitation, the second set of operating condition parameters may include one or more of the following: lifetime degradation percentage of the fuel cell system, environmental acceleration factor, idle time, number of start-stop cycles, time of frequent load changes, heavy load time, natural degradation rate of the fuel cell system, and degradation coefficients under the start-stop condition, the idle condition, the frequent load change condition, and the heavy load condition.

In one example, the power battery dynamic performance degradation model may characterize the relationship between the performance degradation of the power battery and a third set of operating condition parameters. By way of example and not limitation, the third set of operating condition parameters may include one or more of the following: power battery charging rate $I_c$, activation energy, operating temperature, and cumulative charge.

FIG. 3 is a schematic flowchart of a method 300 for controlling vehicle power according to another example of the present disclosure. In this example, the vehicle may be the vehicle shown in FIG. 1, for example, the hybrid excavator including the fuel cell and the power battery. It will be understood that the method of the present disclosure is not limited thereto and may be applied to different vehicles and different vehicle configurations without departing from the scope of the present disclosure. In step 302, the type of construction earthwork can be preliminarily determined through data collected by the visual sensor, and operating condition data of the vehicle, such as an integrated power demand load spectrum of the hybrid excavator and the SOC value of the power battery within the first time duration, is obtained. In one example, the first time duration may also be referred to as a historical time threshold.

In step 304, the operating condition data obtained in step 302 can be used to feedback-correct the type of construction earthwork initially obtained by the visual sensor, and power demand for a future period of time is predicted online through the pre-trained self-organizing map neural network power demand prediction model. In one example, the self-organizing map neural network power demand prediction model may use the operating condition data information encountered during operation of the hybrid excavator obtained in step 302 as a model input, and use output power of the hybrid excavator as a model output.

In some examples, environmental datasets for earthworks with different characteristics can be constructed and offline training can be performed, thereby ultimately obtaining an earthwork classification model. In an actual online application of the hybrid excavator, the earthwork classification model can use the visual sensor to preliminarily perceive construction operating condition information, and feedback-correct an identified type of construction earthwork through a load spectrum in the historical time threshold. In this way, the method in the present disclosure can accurately identify the type of the current construction earthwork through the earthwork classification model, thereby providing an important reference basis for subsequent energy management strategies.

In some examples, load spectrum datasets of different typical earthwork construction operating conditions can be obtained as training sample sets to train a self-organizing map neural network based power demand prediction model, including: using the load spectrum datasets under different typical earthwork construction operating conditions collected in step 302 as an input dataset of the self-organizing map neural network based power demand prediction model; and using the power demand data in the future period of time as an output dataset of the prediction model to achieve accurate prediction of the power demand.

In some examples, normalization may also be performed on the input dataset, such as the load spectrum dataset, and the output dataset, such as the power demand dataset in the future period of time. In addition, in some examples, the self-organizing map neural network based power demand prediction model can be trained by offline training, and the power demand prediction neural network model can be finally obtained through continuous iterative optimization.

In step 306, a power system model of the hybrid excavator may be established based on a topological structure of the hybrid excavator. In one example, an integrated power system model of the hybrid excavator may include an equivalent hydrogen consumption model, a fuel cell dynamic performance degradation model, and a power battery dynamic performance degradation model.

In some examples, the equivalent hydrogen consumption model can be expressed by the following equations (1) to (4):

$$C_{all} = C_{fc} + \kappa C_{bat} \tag{1}$$

$$C_{fc} = mP_{fc} + n \tag{2}$$

$$C_{bat} = \begin{cases} \dfrac{P_{bat}}{\eta_{dis}\eta_{chg,ave}} \cdot \dfrac{C_{fc,avg}}{P_{fc,avg}} & (P_{bat} \geq 0) \\ P_{bat}\eta_{chg}\eta_{dis,ave} \cdot \dfrac{C_{fc,avg}}{P_{fc,avg}} & (P_{bat} < 0) \end{cases} \tag{3}$$

$$\kappa = 1 - \frac{2\mu[s - 0.5(\text{SOC}_{max} + \text{SOC}_{min})]}{\text{SOC}_{max} - \text{SOC}_{min}} \tag{4}$$

In the equations (1) to (4), $C_{all}$ is the equivalent hydrogen consumption; $C_{fc}$ is the hydrogen consumption of the fuel cell; $C_{bat}$ is the equivalent hydrogen consumption of the power battery; $P_{fc}$ is the output power of the fuel cell; $\kappa$ is the equivalent factor of the equivalent hydrogen consumption of the power battery; $\mu$ is the balance coefficient of the power battery SOC; $s$ is the state of charge of the power battery; $m$ and $n$ are constants in the fitting curve of the hydrogen consumption of the fuel cell $C_{fc}$; $P_{bat}$ is the output power of the power battery; $\eta_{dis}$ and $\eta_{dis,ave}$ are the discharge efficiency and average discharge efficiency of the power battery, respectively; $\eta_{chg}$ and $\eta_{chg,ave}$ are the charge efficiency and average charge efficiency of the power battery, respectively; $C_{fc,avg}$ is the average instantaneous hydrogen consumption of the fuel cell; and $P_{fc,avg}$ is the average output power of the fuel cell.

In some examples, the fuel cell dynamic performance degradation model can be expressed by the following equation (5):

$$\Delta\phi_{fc} = k_p[(k_1 t_1 + k_2 n_1 + k_3 t_2 + k_4 t_3) + \beta] \tag{5}$$

In the equation (5), $\Delta\phi_{fc}$ is the lifetime degradation percentage of the fuel cell system; $k_p$ is the environmental acceleration coefficient; $t_1$ is the idle time; $n_1$ is the number of start-stop cycles; $t_2$ is the time of frequent load changes; $t_3$ is the heavy load time; $\beta$ is the natural degradation rate of the fuel cell system; and $k_1$, $k_2$, $k_3$, and $k_4$ are degradation coefficients under the start-stop condition, the idle condition, the frequent load change condition, and the heavy load condition, respectively.

In some examples, the power battery dynamic performance degradation model may be:

$$Q_{loss} = (\alpha \cdot SOC + \beta)e^{\left(\frac{-E_a + \eta I_c}{R_g \cdot (273.15 + \theta)}\right)} \cdot (Ah)^Z \tag{6}$$

In the equation (6), $\alpha$ and $\beta$ are coefficients related to SOC; $\eta$ is the coefficient of the power battery charging rate $I_c$; $R_g$ is the ideal gas constant; $E_a$ is the activation energy; $\theta$ is the operating temperature; $Ah$ is the cumulative charge; and $Z$ is the power exponential factor.

In step 308, a periodic operating cost objective function is established based on equivalent hydrogen consumption, fuel cell dynamic performance degradation, and power battery dynamic performance degradation, and the power battery SOC is determined as a state variable and the fuel cell output power is determined as a control variable.

In some examples, the objective function for objectives of reducing hydrogen consumption and slowing down the dynamic performance degradation of the fuel cell and the power battery is established:

$$minJ = m_{H_2\_bat} + \Sigma\left(\dot{m}_{H_2} + \dot{m}_{fc\_life} + \dot{m}_{bat\_life}\right) \tag{7}$$

In the equation (7), $m_{H_2\_bat}$ is the equivalent hydrogen consumption of a difference between initial and final power battery SOCs; $\dot{m}_{H_2}$ is the fuel cell hydrogen consumption; $\dot{m}_{fc\_life}$ is the equivalent hydrogen consumption caused by the fuel cell lifetime degradation; and $\dot{m}_{bat\_life}$ is the equivalent hydrogen consumption caused by the power battery lifetime degradation.

The power battery SOC is selected as the state variable $x(t)$, and the fuel cell output power $P_{fc}$ is selected as the control variable $u(t)$, so the objective function can be written as:

$$minJ\left(SOC, P_{fc}, t\right) = min\left\{\phi\left(SOC(t_f), t_f\right) + \int_{t_0}^{t_f}\left(\dot{m}_{fc} + \dot{m}_{fc\_life} + \dot{m}_{bat\_life}\right) dt\right\}$$

$$\tag{8}$$

In the equation (8), $\phi(SOC(t_f), t_f)$ is a final state cost function.

The relationship between the degree of dynamic performance degradation of the fuel cell and the equivalent hydrogen consumption can be expressed as:

$$\dot{m}_{fc\_life} = \frac{\Delta\phi_{fc} M_{fc}}{10\% \alpha_{H_2}} \tag{9}$$

In the equation (9), $M_{fc}$ is the price of a fuel cell stack; and $\alpha_{H_2}$ is the price of hydrogen.

The relationship between the degree of dynamic performance degradation of the power battery and the equivalent hydrogen consumption can be expressed as:

$$\dot{m}_{bat\_life} = \frac{\Delta Q_{loss} M_{bat}}{20\% \alpha_{H_2}} \tag{10}$$

In the equation (10), $M_{bat}$ is the price of the power battery.

The final state SOC cost function meets:

$$\Phi\left(SOC(t_f), t_f\right) = \begin{cases} m_{H_2\_bat}, & if\ SOC\ meets\ the\ constraints \\ 10000, & if\ SOC\ does\ not\ meet\ the\ constraints \end{cases} \tag{11}$$

In step 310, a Hamiltonian function is constructed based on the two-end constrained optimal control principle and in combination with state constraints.

In one example, the constraints of the objective function are:

$$s.t. \begin{cases} P_d(k) = P_{fc}(k) + P_{bat}(k) \\ \left| \frac{P_{fc}(k+1) - P_{fc}(k)}{T} \right| \leq v_{fc} \\ P_{bat\_min} \leq P_{bat}(k) \leq P_{bat\_max} \\ P_{fc\_min} \leq P_{fc}(k) \leq P_{fc\_max} \\ SOC_{min} \leq SOC(k) \leq SOC_{max} \end{cases} \qquad (12)$$

In the equation (12), $P_d$ is the total power demand; $P_{fc}$ is the output power of the fuel cell; $P_{bat}$ is the output power of the power battery; $v_{fc}$ is the maximum power response speed of the fuel cell; $P_{bat\_min}$ is the minimum power of the power battery; $P_{bat\_max}$ is the maximum power of the power battery; $P_{fc\_min}$ is the minimum power of the fuel cell; $P_{fc\_max}$ is the maximum power of the fuel cell; $SOC_{min}$ is the minimum SOC of the power battery; and $SOC_{max}$ is the maximum SOC of the power battery.

In step 312, the trained self-organizing map neural network can be used to predict the integrated power demand load spectrum of the excavator to analyze the power demand load spectrum in the future period of time, and a predicted optimal co-state variable is solved for with the help of the two-end constrained optimal control method.

In step 314, the predicted optimal co-state variable obtained in step 312 may be applied to the objective function to obtain a solution that minimizes the objective function. This solution is the optimal power allocation between the fuel cell and the power battery.

In one example, a comprehensive objective function may be constructed by using the equivalent hydrogen consumption, the dynamic performance degradation of the fuel cell, and the dynamic performance degradation of the power battery as optimization objectives. Based on a framework of the two-end constrained optimal control theory, the corresponding Hamiltonian function can be further derived:

$$H\big(SOC, P_{fc}, \lambda(t)\big) = \dot{m}_{fc} + \dot{m}_{fc\_life} + \dot{m}_{bat\_life} + \lambda(t)f\big(x(t), u(t)\big) \qquad (13)$$

In the equation (13), $\lambda(t)$ is the co-state variable.

In one example, according to the two-end constrained optimal control theory, the optimal power allocation is obtained, where the optimal power output of the fuel cell is:

$$P_{fc}^* = argmin\, H\left(SOC^*(t), \lambda^*(t), t\right) \qquad (14)$$

The optimal power output of the power battery is:

$$P_{bat}^* = P_d - P_{fc}^* \qquad (15)$$

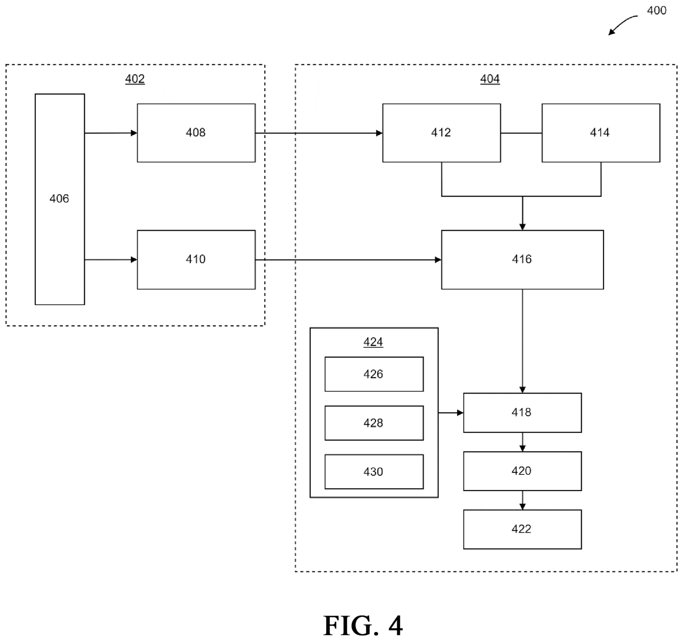

FIG. 4 is a schematic flowchart of an example process of performing offline training and online prediction in a method 400 for controlling vehicle power according to still another example of the present disclosure. As shown in FIG. 4, the method 400 includes an offline training portion 402 and an online prediction portion 404.

In some examples, the offline training portion 402 includes collecting historical operating condition data of different earthwork construction operations of the hybrid excavator in step 406, establishing an earthwork classification model in step 408, and establishing a short-term power prediction model based on the self-organizing map neural network and the classification model in step 410.

In one example, in step 408, an environmental dataset of earthworks with different characteristics can be constructed and offline training can be performed to ultimately obtain the earthwork classification model. In the actual online application of the hybrid excavator, the model uses the visual sensor to accurately perceive construction operating condition information, and uses the operating condition data obtained in step 406 to feedback-correct the type of construction earthwork initially obtained by the visual sensor, thereby accurately identifying the type of the current construction earthwork through the earthwork classification model.

In one example, in step 410, an input dataset and an output dataset may be normalized by using the typical operating condition data information encountered during construction operation of the hybrid excavator obtained in step 406 as a model input and using the output power of the hybrid excavator as a model output, and the self-organizing map neural network based power demand prediction model is trained using an offline training method. Through continuous iterative optimization, the self-organizing map neural network power demand prediction model for different earthwork construction operations is finally obtained.

The online prediction portion preliminarily determines the type of construction earthwork based on the data collected by the visual sensor in step 412, and accurately determines the type of construction earthwork based on the load spectrum in the historical time threshold collected in step 414. In step 416, the power demand load spectrum in a future period of time is predicted using the self-organizing map neural network. Then, based on the predicted operating condition load spectrum, the optimal power allocation of the hybrid excavator is solved for by the two-end constrained optimal control method. Specifically, in step 424, the integrated power system is model-constructed, including an equivalent hydrogen consumption model 426, a fuel cell dynamic performance degradation model 428, and a power battery dynamic performance degradation model 430. By way of example and not limitation, examples of the above models can be found in the above with reference to FIG. 3.

In step 418, a periodic operating cost objective function is established. In step 420, an optimal co-state variable is predicted. In one example, step 420 specifically includes inputting the power demand load spectrum within the historical time threshold into the self-organizing map neural network prediction model to obtain the power demand load spectrum in a future period of time, and based on the fact that an SOC final value at the end of the power battery must meet clear requirements, feedback-correction is performed with the help of the two-end constrained optimal control method until the predicted optimal co-state variable is finally obtained. In step 422, based on the two-end constrained optimal control method, the optimal power allocation between the fuel cell and the power battery is obtained.

In this way, the present disclosure has good adaptability to operating conditions, comprehensively considers the historical information and future information of the excavator, can effectively improve the economic efficiency of the fuel cell hybrid power system, and alleviate the problem of short service time of fuel cells and power batteries.

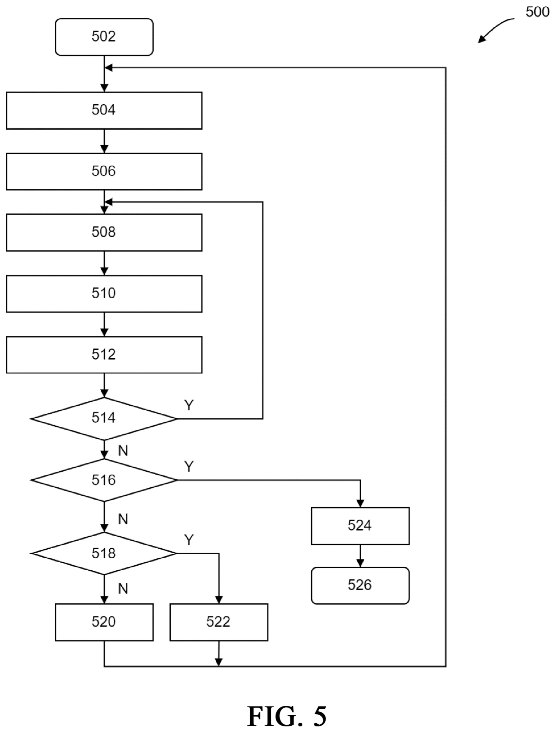

FIG. 5 is a schematic flowchart of an example process 500 of solving for an optimal co-state variable in a method for controlling vehicle power according to an example of the present disclosure. The process 500 solves for an optimal co-state variable $\lambda$ during a second time duration from an initial time t=0 to a final time $t_f$.

The process 500 begins at step 502. In step 504, a minimum value $\lambda$min and a maximum value $\lambda$max of the optimal co-state variable $\lambda$ and a reference value $SOC_{ref}$ of the state of charge of the power battery are initialized. In step 506, an average value $\lambda$avg=($\lambda$min+$\lambda$max)/2 of the optimal co-state variable $\lambda$ may be calculated, which corresponds to the initial state, for example, t=0. In step 508, the power demand $P_{re}$ at the current time is calculated. In step 510, the optimal fuel cell output power $P^*_{fc}(t)$ at the current time is found. In 512, the state of charge SOC of the power battery at the next time (t=t+1) is calculated, and the next time (t=t+1) is used as the new current time.

In step 514, it is determined whether the current time has reached a final time $t_f$. If the current time has not reached the final time $t_f$, the process returns to step 508, and steps 508 to 512 are repeatedly performed for the new current time. If it is determined in step 514 that the current time has reached the final time $t_f$, the process proceeds to step 516 to determine whether an absolute value $|SOC(t_f) - SOC_{ref}|$ of a difference between the state of charge $SOC(t_f)$ of the power battery at the final time $t_f$ and the reference value $SOC_{ref}$ is less than a predetermined threshold $\delta$. If the absolute value of the difference is less than the predetermined threshold $\delta$, the process proceeds to step 524 to output the optimal co-state variable $\lambda$ obtained by the solution, and the process 500 ends at step 526. If the absolute value of the difference is not less than the predetermined threshold $\delta$, the process proceeds to step 518. In step 518, it is determined whether the state of charge $SOC(t_f)$ of the power battery at the final time $t_f$ is less than the reference value $SOC_{ref}$. If, in step 518, it is determined that the state of charge $SOC(t_f)$ of the power battery at the final time $t_f$ is less than the reference value $SOC_{ref}$, the process proceeds to step 520, where the currently obtained value of the co-state variable $\lambda$ is used as the minimum value $\lambda$min of the co-state variable, the process returns to step 504, and the initialization step 504 and the process 500 are performed once again. If no, the process proceeds to step 522, the currently obtained value of the co-state variable $\lambda$ is used as the maximum value $\lambda$max of the co-state variable, the process returns to step 504, and the initialization step 504 and the process 500 are performed once again.

It will be understood that the process 500 shown in FIG. 5 is only an illustrative example of solving for the optimal co-state variable. After reading the present disclosure, those skilled in the art may adopt a process different from that shown in FIG. 5 to solve for the optimal co-state variable without departing from the scope of the present disclosure.

In some examples of the present disclosure, a computer system is provided, including: a processing circuit; and a memory having computer-executable instructions stored thereon, where the computer-executable instructions, when executed by the processing circuit, implement the method according to the present disclosure.

In some examples of the present disclosure, a vehicle is provided, the vehicle including a fuel cell, a power battery, a hydraulic system, an accessory system, and a visual sensor, where the vehicle further includes the computer system according to the present disclosure. In some examples, the vehicle is a hybrid excavator.

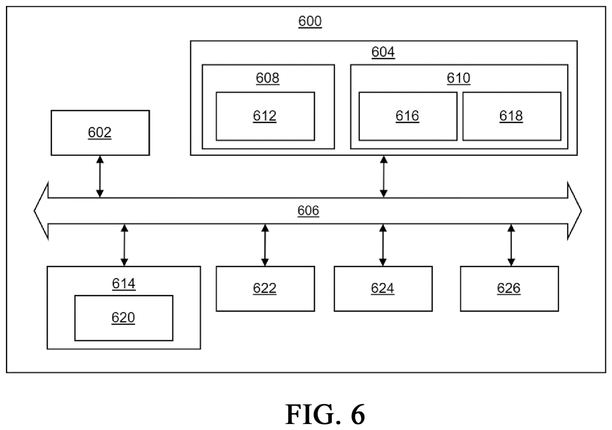

FIG. 6 is a schematic diagram of a computer system 600 for implementing examples disclosed herein. The computer system 600 is suitable for executing instructions from a computer-readable medium to perform these and/or any functions or processes described herein. The computer system 600 may be connected (e.g., networked) to other machines via a Local Area Network (LAN), a Local Interconnect Network (LIN), an automotive network communication protocol (e.g., FlexRay), an intranet, an extranet, or the Internet. Although only a single device is shown, the computer system 600 may include any collection of devices that individually or collectively execute a set (or multiple sets) of instructions to perform any one or more of the methods described herein. Accordingly, any reference in this specification and/or in the claims to a computer system, a computing system, a computer device, a computing device, a control system, a control unit, an Electronic Control Unit (ECU), a processor device, a processing circuit, and the like includes a reference to one or more such devices that individually or collectively execute a set (or multiple sets) of instructions to perform any one or more of the methods described herein. For example, the control system may include a single control unit or multiple control units that are connected or otherwise in communication with each other or other devices so that any performed functions can be distributed among the control units as desired. Furthermore, such devices may be connected or otherwise communicate with each other or other devices through various system architectures, such as directly or via a Controller Area Network (CAN) bus.

The computer system 600 may include at least one computing device or electronic device that may include firmware, hardware, and/or execute software instructions to implement the functionality described herein. The computer system 600 may include a processing circuit 602 (for example, a processing circuit including one or more processor devices or control units), a memory 604, and a system bus 606. The computer system 600 may include at least one computing device having a processing circuit 602. The system bus 606 provides an interface for system components including, but not limited to, the processor 604 and the processing circuit 602. The processing circuit 602 may include any number of hardware components for performing data or signal processing or for executing computer code stored in the memory 604. The processing circuit 602 may include, for example, a general-purpose processor, a special-purpose processor, a Digital Signal Processor (DSP), an Application Specific Integrated Circuit (ASIC), a Field Programmable Gate Array (FPGA), a circuit containing processing components, a group of distributed processing components, a group of distributed computers configured to perform processing, or other programmable logic devices, discrete gate or transistor logic, discrete hardware components, or any combination thereof designed to perform the functions described herein. The processing circuit 602 may also include computer executable code for controlling the execution of the programmable device.

The system bus 606 may be any of several types of bus structures and may further be interconnected to a memory bus (with or without a memory controller), a peripheral bus, and/or a local bus using any of a variety of bus architectures. The memory 604 may be one or more devices that store data and/or computer code for performing or assisting in the implementation of the methods described herein. The memory 604 may include database components, object code components, script components, or other types of information structures for supporting the various activities described herein. Any memory devices shown or localized may be utilized by the systems and methods described herein. The memory 604 may be communicatively connected (for example, via a circuit or any other wired, wireless, or network connection) to the processing circuit 602 and may include computer code for performing one or more processes described herein. The memory 604 may include a non-volatile memory 608 (e.g., a Read-Only Memory (ROM), an Erasable Programmable Read-Only Memory (EPROM), an Electrically Erasable Programmable Read-Only Memory (EEPROM), and the like), and a volatile memory 610 (e.g., a Random-Access Memory (RAM)), or any other medium that can be used to execute or store desired program codes or data structures in the form of machine-executable instructions and that can be accessed by a computer or other machine having the processing circuit 602. A Basic Input/Output System (BIOS) 612 may be stored in the non-volatile memory 608 and may include basic routines that help transmit information between elements within the computer system 600.

The computer system 600 may also include or be coupled to a non-volatile computer-readable storage medium, such as a storage device 614, which may include, for example, an internal or external Hard Disk Device (HDD) (e.g., Enhanced Integrated Drive Electronics (EIDE) or Serial Advanced Technology Attachment (SATA)), a hard disk HDD for storage (e.g., EIDE or SATA), a flash memory, or the like. The storage device 614 and other drives associated with computer-readable and computer-usable media may provide non-volatile storage of data, data structures, computer-executable instructions, and so forth.

The hard-coded or soft-coded computer code may be provided as one or more modules. The one or more modules may be implemented as software and/or hard-coded in circuit to perform, in whole or in part, the functions described herein. The modules may be stored in the storage device 614 and/or the volatile memory 610, which may include an operating system 616 and/or one or more program modules 618. All or part of the examples described herein may be implemented as a computer program 620 stored on a transitory or non-transitory computer-usable or computer-readable storage medium (e.g., a single medium or multiple media), such as the storage device 614, which includes complex programming instructions (e.g., complex computer-readable program instructions) to cause the processing circuit 602 to perform the actions described herein. Thus, the computer readable program code of the computer program 620 may include software instructions for implementing the functions of the examples described herein when executed by the processing circuit 602. In some examples, the storage device 614 may be a computer program product (e.g., a readable storage medium) having the computer program 620 stored thereon, where at least a portion of the computer program 620 may be loaded (e.g., into a processor) to implement the functions of the examples described herein when executed by the processing circuit 602. The processing circuit 602 may serve as a controller or control system for the computer system 600 to implement the functions described herein.

The computer system 600 may include an input device interface 622 configured to receive input and selections communicated to the computer system 600 from, for example, a keyboard, a mouse, a touch-sensitive surface, or the like, when executing instructions. These input devices can be connected to the processing circuit 602 through an input device interface 622 coupled to the system bus 606, but can also be connected through other interfaces, such as a parallel port, an Institute of Electrical and Electronic Engineers (IEEE) 1394 serial port, a Universal Serial Bus (USB) port, an Infra-Red (IR) interface, and the like. The computer system 600 may include an output device interface 624 configured to forward output to, for example, a monitor or a video display unit (e.g., a Liquid Crystal Display (LCD), or a Cathode Ray Tube (CRT)). The computer system 600 may include a communication interface 626 suitable for communicating with a network in an appropriate manner as needed.

The descriptions of operational actions described in any example aspects herein are provided as examples and discussions. These actions may be performed by hardware components, may be embodied as machine-executable instructions to cause a processor to perform the actions, or may be performed by a combination of hardware and software. Although a specific order of method actions is shown or described, the order of the actions may vary. Additionally, two or more actions may be performed simultaneously or in a partially parallel manner.

It will be understood that the present disclosure is not limited to the aspects described above and shown in the drawings; rather, those skilled in the art will recognize that many changes and modifications are possible within the scope of the present disclosure and the appended claims. In the drawings and specification, the various aspects disclosed are for illustrative purposes only and not for purposes of limitation, the scope of the present disclosure being set forth in the appended claims.

## Claims

1. A computer-implemented method (200) for power allocation of a vehicle (100), the vehicle comprising a fuel cell (106), a power battery (108), a hydraulic system (110), an accessory system (104), and a visual sensor (114), the method being performed by a processing circuit of a computer system (102), the method comprising:

    obtaining (202) an image of a construction earthwork by the visual sensor;
    identifying (204) a type of the construction earthwork by an earthwork classification model based on the image of the construction earthwork;
    obtaining (206) a power demand load spectrum of the vehicle within a first time duration;
    correcting (208) the type of the construction earthwork based on the power demand load spectrum;
    inputting (210) the power demand load spectrum and the corrected type of the construction earthwork into a pre-trained neural network prediction model, and predicting a power load spectrum of the vehicle within a second time duration by the neural network prediction model; and
    determining (212) optimal power allocation between the fuel cell and the power battery based on the predicted power load spectrum, so as to minimize an operating cost objective function within the second time duration.

2. The method according to claim 1, wherein the earthwork classification model is a neural network obtained by offline training based at least on an image dataset of different types of earthworks,
    wherein an input of the earthwork classification model comprises image data of the construction earthwork, and an output comprises the type of the construction earthwork.

3. The method according to claim 1, wherein the neural network prediction model is a neural network obtained by offline training based at least on a historical operating condition dataset of the vehicle's operation on multiple types of construction earthworks,
    wherein an input of the neural network prediction model comprises a historical power demand load spectrum within the first time duration and a type of a corresponding construction earthwork, and an output comprises a predicted power demand load spectrum within the second time duration.

4. The method according to claim 3, wherein the historical operating condition dataset comprises historical power demand load spectrum data of the vehicle.

5. The method according to claim 1, wherein the step of determining (212) the optimal power allocation between the fuel cell and the power battery comprises:

determining an operating cost objective function;
determining constraints of the operating cost objective function based on a current operating condition of the vehicle; and
obtaining the optimal power allocation between the fuel cell and the power battery based on the operating cost objective function and the constraints.

6. The method according to claim 5, wherein the step of determining the operating cost objective function comprises:

determining the operating cost objective function according to the current operating condition of the vehicle and based on equivalent hydrogen consumption, dynamic performance degradation of the fuel cell, and dynamic performance degradation of the power battery,
wherein the equivalent hydrogen consumption comprises hydrogen consumption of the fuel cell and equivalent hydrogen consumption of the power battery.

7. The method according to claim 6, wherein the operating cost objective function is an objective function for multi-objective minimization of the equivalent hydrogen consumption, the dynamic performance degradation of the fuel cell, and the dynamic performance degradation of the power battery, or
the operating cost objective function is an objective function for minimization of an operating cost, wherein the operating cost is determined based on the equivalent hydrogen consumption, the dynamic performance degradation of the fuel cell, and the dynamic performance degradation of the power battery.

8. The method according to claim 5, further comprising establishing a power system model of the vehicle, wherein the power system model comprises an equivalent hydrogen consumption model, a fuel cell dynamic performance degradation model, and a power battery dynamic performance degradation model,

wherein the equivalent hydrogen consumption model characterizes a relationship between the equivalent hydrogen consumption of the vehicle and a first set of operating condition parameters;
the fuel cell dynamic performance degradation model characterizes a relationship between performance degradation of the fuel cell and a second set of operating condition parameters; and
the power battery dynamic performance degradation model characterizes a relationship between performance degradation of the power battery and a third set of operating condition parameters.

9. The method according to claim 8, wherein the first set of operating condition parameters comprises one or more of the following: hydrogen consumption of the fuel cell, equivalent hydrogen consumption of the power battery, output power of the fuel cell, equivalent factor of equivalent hydrogen consumption of the power battery, balance coefficient of state of charge (SOC) of the power battery, state of charge of the power battery, constant in a hydrogen consumption fitting curve of the fuel cell, output power of the power battery, discharge efficiency and average discharge efficiency of the power battery, average instantaneous hydrogen consumption of the fuel cell, average output power of the fuel cell, lifetime degradation percentage of the fuel cell system, environmental acceleration factor, idle time, number of start-stop cycles, time of frequent load changes, heavy load time, natural degradation rate of the fuel cell system, and degradation coefficients under the start-stop condition, the idle condition, the frequent load change condition, and the heavy load condition;

the second set of operating condition parameters comprises one or more of the following: lifetime degradation percentage of the fuel cell system, environmental acceleration factor, idle time, number of start-stop cycles, time of frequent load changes, heavy load time, natural degradation rate of the fuel cell system, and degradation coefficients under the start-stop condition, the idle condition, the frequent load change condition, and the heavy load condition; and
the third set of operating condition parameters comprises one or more of the following: power battery charging rate Ic, activation energy, operating temperature, and cumulative charge.

10. The method according to claim 5, wherein the constraints of the operating cost objective function comprise:

total power demand comprises a sum of the output power of the fuel cell and the output power of the power battery;
a speed at which the fuel cell outputs power within the second time duration is less than or equal to a maximum power response speed of the fuel cell;

the output power of the fuel cell is between minimum and maximum values of the output power of the fuel cell; and the SOC of the power battery is between minimum and maximum values of the SOC of the power battery.

11. The method according to claim 5, wherein the step of obtaining the optimal power allocation between the fuel cell and the power battery based on the operating cost objective function and the constraints comprises:

constructing a Hamiltonian function based on the constraints through a two-end constrained optimal control method;
deriving a predicted optimal co-state variable based on the Hamiltonian function; and
applying the predicted optimal co-state variable to the operating cost objective function to solve for the optimal power allocation that minimizes the operating cost objective function.

12. The method according to claim 1, wherein the first time duration is at least one of the following: less than or equal to 30 seconds, less than or equal to 15 seconds, and less than or equal to 5 seconds; and the second time duration is at least one of the following: less than or equal to 30 seconds, less than or equal to 15 seconds, and less than or equal to 5 seconds.

13. The method according to claim 1, wherein the neural network prediction model comprises a self-organizing map neural network.

14. The method according to claim 1, wherein the vehicle is a hybrid excavator.

15. A computer system (600), comprising:

a processing circuit (602);
a memory (604) having computer-executable instructions stored thereon, wherein the computer-executable instructions, when executed by the processing circuit, implement the method according to any one of claims 1 to 14.

16. A vehicle (100), comprising a fuel cell (106), a power battery (108), a hydraulic system (110), an accessory system (104), and a visual sensor (114), wherein the vehicle further comprises the computer system (600) according to claim 15.

17. The vehicle (100) according to claim 16, wherein the vehicle is a hybrid excavator.

**FIG. 1**

FIG. 2

FIG. 3

400

402

406

408

410

404

412

414

416

424

426

428

430

418

420

422

FIG. 4

FIG. 5

FIG. 6

Europäisches
Patentamt
European
Patent Office
Office européen
des brevets

# EUROPEAN SEARCH REPORT

**Application Number**

EP 25 21 8641

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/203908 A1 (BHIMANI MOHAK PRAFULKUMAR [US] ET AL) 30 June 2022 (2022-06-30) | 1-7, 10-17 | INV. B60L58/00 |
| Y | * paragraphs [0016], [0017], [0019], [0026], [0034] - [0035], [0037], [0045], [0054], [0059], [0060], [0061], [0067], [0069], [0071], [0077], [0079] - paragraph [0086]; figures 1,2,5,6,7 * | 8,9 | ADD. B60L58/40 G06N3/08 |
| | ----- | | |
| Y | LI TIANYU ET AL: "Multiobjective Optimal Predictive Energy Management for Fuel Cell/Battery Hybrid Construction Vehicles", IEEE ACCESS IEEE, USA, vol. 8, 24 January 2020 (2020-01-24), pages 25927-25937, XP011771189, DOI: 10.1109/ACCESS.2020.2969494 [retrieved on 2020-02-07] | 8,9 | |
| A | * the whole document * | 1-7, 10-17 | TECHNICAL FIELDS SEARCHED (IPC) |
| | ----- | | |
| A | GB 2 617 695 A (HYDROGEN VEHICLE SYSTEMS LTD; HYDROGEN VEHICLE SYSTEMS LTD [GB]) 18 October 2023 (2023-10-18) * the whole document * | 1-17 | B60L |
| | ----- | | |

The present search report has been drawn up for all claims

| Place of search | Date of completion of the search | Examiner |
|---|---|---|
| The Hague | 31 March 2026 | Orbay, Metin |

EPO FORM 1503 03.82 (P04C01)

## ANNEX TO THE EUROPEAN SEARCH REPORT
## ON EUROPEAN PATENT APPLICATION NO.

EP 25 21 8641

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2026

| Patent document cited in search report | | | Publication date | Patent family member(s) | | Publication date |
|---|---|---|---|---|---|---|
| US 2022203908 | A1 | | 30-06-2022 | EP | 4271596 A1 | 08-11-2023 |
| | | | | US | 2022203908 A1 | 30-06-2022 |
| | | | | WO | 2022144129 A1 | 07-07-2022 |
| GB 2617695 | A | | 18-10-2023 | EP | 4558352 A1 | 28-05-2025 |
| | | | | EP | 4558353 A1 | 28-05-2025 |
| | | | | EP | 4558354 A1 | 28-05-2025 |
| | | | | EP | 4590538 A2 | 30-07-2025 |
| | | | | GB | 2617695 A | 18-10-2023 |
| | | | | GB | 2617696 A | 18-10-2023 |
| | | | | GB | 2617697 A | 18-10-2023 |
| | | | | GB | 2617698 A | 18-10-2023 |
| | | | | GB | 2625971 A | 03-07-2024 |
| | | | | GB | 2628312 A | 18-09-2024 |
| | | | | GB | 2628951 A | 09-10-2024 |
| | | | | GB | 2628956 A | 09-10-2024 |
| | | | | US | 2023322127 A1 | 12-10-2023 |
| | | | | US | 2023322198 A1 | 12-10-2023 |
| | | | | US | 2023322203 A1 | 12-10-2023 |
| | | | | US | 2023322204 A1 | 12-10-2023 |
| | | | | WO | 2023199040 A1 | 19-10-2023 |
| | | | | WO | 2023199041 A2 | 19-10-2023 |
| | | | | WO | 2023199042 A1 | 19-10-2023 |
| | | | | WO | 2023199043 A1 | 19-10-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Institute of Electrical and Electronic Engineers. IEEE, 1394